# EUROPÄISCHE PATENTSCHRIFT

(11) **EP 3 497 357 B1**
(45) Veröffentlichungstag und Bekanntmachung des Hinweises auf die Patenterteilung: **17.06.2020**
(21) Anmeldenummer: 17757482.9
(22) Anmeldetag: 08.08.2017
(51) Int. Cl.: F16K 99/00, F16K 7/14

(54) **VENTIL AUS EINEM KERAMISCHEN WERKSTOFF UND EIN VERFAHREN ZU SEINER HERSTELLUNG**
VALVE MADE OF A CERAMIC MATERIAL AND METHOD FOR THE PRODUCTION THEREOF
CLAPET CONSISTANT EN UN MATÉRIAU CÉRAMIQUE ET PROCÉDÉ POUR LE PRODUIRE

(30) Priorität: 10.08.2016 DE 102016214883
(43) Veröffentlichungstag der Anmeldung: 19.06.2019
(73) Patentinhaber: Fraunhofer-Gesellschaft zur Förderung der angewandten Forschung e.V., 80686 München (DE)
(72) Erfinder: GOLDBERG, Adrian, 01259 Dresden (DE); PARTSCH, Uwe, 01277 Dresden (DE); ZIESCHE, Steffen, 01277 Dresden (DE)
(74) Vertreter: Pfenning, Meinig & Partner mbB
(86) Internationale Anmeldenummer: PCT/EP2017/070019
(87) Internationale Veröffentlichungsnummer: WO 2018/029170

(56) Entgegenhaltungen:
- CN-U- 203 395 256
- DE-A1-102008 054 222

## Beschreibung

Die Erfindung betrifft ein Ventil aus einem keramischen Werkstoff und ein Verfahren zu seiner Herstellung.

Zur Steuerung von technischen und chemischen Prozessen in der Industrie, sowie zur Regelung von komplexen Systemen, wie beispielsweise in fluidischen oder mikrofluidischen Systemen, sind Ventile erforderlich. Je nach Einsatzort und Bedingungen werden aktive, d.h. durch äußere Anregung öffnende bzw. schließende Ventile, oder passive Ventile, die durch Gegendruck in eine Richtung öffnen und schließen, benötigt. Besonders bei Einsatzbedingungen mit erhöhten Temperaturen (>100°C) oder für chemisch aggressive Medien sind spezielle Ventile erforderlich, die auch über einen längerem Zeitraum, zum Teil über mehrere Jahre, funktionsfähig sind.

Hier stoßen die üblicherweise eingesetzten Materialien, wie Metalle oder Halbleiter an ihre Grenzen. Ein weiterer wesentlicher Aspekt für immer komplexer und kleiner werdende Systeme ist die Miniaturisierung aller Komponenten, um somit neben der erreichbaren Platzersparnis die Kosten weiter zu senken.

Mit den Standardfertigungsverfahren der Feinwerkmechanik, im Regelfall der Formgebung von metallischen Werkstoffen, ist der erreichbare Miniaturisierungsgrad eingeschränkt. Die für die Massenfertigung taugliche Halbleitertechnologie bietet den Vorteil der Miniaturisierung, ist aber durch die physikalischen Eigenschaften des Basismaterials Silizium in ihren Einsatzbedingungen, wie der Stabilität unter mechanischer Belastung und Stabilität unter aggressiven Medien, begrenzt.

Die keramische Mehrlagentechnik ist ebenfalls eine für die Massenfertigung geeignete Technologie, die es ermöglicht, mehrlagige Verdrahtungsträger für die Elektronik sowie mikrosystemtechnische Komponenten kostengünstig zu fertigen. Neben der 3D-Integration der in der Mehrlagenkomponente benötigten Leiterbahnen und Durchkontaktierungen von Ebene zu Ebene, der sog. Vias, erlaubt die keramischen Mehrlagentechnologie die Integration passiver Bauelemente wie Spulen, Widerstände und Kondensatoren. Hohe Packungsdichten, Hochfrequenztauglichkeit, enorme Widerstandsfähigkeit gegen Umwelteinflüsse und hohe Zuverlässigkeit zeichnen keramische Mehrlagenkomponenten aus. Dennoch fehlen hier bisher industrietaugliche Konzepte für die Herstellung von Ventilen mittels keramischer Mehrlagentechnologie.

Miniaturisierte Ventile bestehen aus einer Kombination von Werkstoffen unterschiedlicher Härte. Die übliche Kombination ist ein harter Verschluss aus einem keramischen Material, einem metallischen Material oder Silizium, und eine weiche Dichtung, wie z. B. aus einem Polymer. So wird beispielsweise auf einen keramischen Träger (LTCC) eine flexible Membran aus Polymeren aufgebracht und diese mittels einer aufgebrachten piezoelektrischen Schicht ausgelenkt.

Ein weiteres bekanntes Beispiel für Miniaturisierung ist eine Kombination einer silizium-basierten Membran und einer Kanalführung in LTCC, wobei die Auslenkung der Membran durch eine in die LTCC eingebettete Luftspule oder mit Hilfe eines Heizers als thermischem Aktor erfolgt.

Ein weitere bekannte Ausführungsvariante basiert auf einem mehrlagigen keramischen Substrat in Verbindung mit einer Siliziummembran, bei der die Siliziummembran durch in die Keramik eingebettete Mikrokanäle und durch ein sich infolge thermischer Aktivierung ausdehnendes Fluid bewegt wird. Aber auch klassische Kombinationen mit Gehäuse und Druckfeder aus Stahl und einem Verschluss aus einem keramischen Werkstoff in feinwerktechnischer Fertigung finden Anwendung bei erhöhten Temperaturen oder aggressiven Medien.

In der Literatur wird auch eine reine LTCC-Variante beschrieben, bei der das entwickelte Rückschlagventil den Fluidkanal mit Hilfe eines sich im Medium bewegenden keramischen Formstücks verschlossen wird.

Die bisherigen Lösungen weisen mindestens je einen der folgenden Nachteile auf:
- Der Herstellungsaufwand ist sehr hoch.
- Der Miniaturisierungsgrad ist begrenzt.
- Die Eigenschaften der Aktoren sind für die Anwendungen zum Teil ungeeignet.
- Der Energiebedarf der Ventile ist hoch.

Zudem verhindern individuelle lösungsspezifische Nachteile den praktischen Einsatz.

DE102008054222 offenbart ein Ventil aus einem keramischen Werkstoff gemäß dem Oberbegriff des Anspruchs 1.

Es ist daher Aufgabe der Erfindung, ein Ventil und ein Verfahren zu seiner Herstellung vorzuschlagen, wobei die benannten Nachteile vermieden werden und eine weitere Miniaturisierung erreicht werden kann.

Erfindungsgemäß wird die Aufgabe mit einem Ventil, das die Merkmale des Anspruchs 1 aufweist, und einem Verfahren zu seiner Herstellung nach Anspruch 11 gelöst. Vorteilhafte Ausgestaltungen und Weiterbildungen der Erfindung können mit Merkmalen, die in den untergeordneten Ansprüchen beschrieben sind, realisiert werden.

Ein erfindungsgemäßes Ventil aus einem keramischen Werkstoff ist aus einem ersten Grundkörper und einem zweiten Grundkörper gebildet. Die Grundkörper sind mittels eines Fügematerials zusammengefügt und bilden dabei eine Kavität zwischen dem ersten und dem zweiten Grundkörper aus.

Die Grundkörper sind jeweils aus mehreren Lagen eines keramischen Werkstoffs gebildet.

In dem ersten Grundkörper ist auf einer dem zweiten Grundkörper zugewandten Wand eine Zuführung für ein Fluid in die zwischen den Grundkörpern gebildete Kavität ausgebildet. Außerdem ist auf der Oberfläche der Wand im Inneren der Kavität ein Dichtelement umlaufend um die Zuführung für das Fluid aufgebracht.

In der Kavität zwischen dem ersten und dem zweiten Grundkörper ist eine Membran fixiert, die aus einem keramischen Werkstoff gebildet und elastisch verformbar ist. In der Kavität ist weiterhin eine Durchführung für das Fluid in Form einer Bypassleitung ausgebildet. Durch die Durchführung kann das Fluid bei geöffnetem Ventil, also wenn die Membran von dem Dichtelement abgehoben ist, durch die Kavität und eine Abführung, die in dem zweiten Grundkörper ausgebildet ist, aus dem Ventil austreten.

Die Schichten aus einem keramischen Werkstoff und/oder die Membran können aus LTCC, HTCC, Glas- und/oder Glas-Keramik-Komposit gebildet sein. Bevorzugt sind die Schichten und die Membran aus dem gleichen Werkstoff gebildet. Das Fügematerial kann ein Glaslot, ein Aktivlot oder ein Klebstoff sein.

Die Grundfläche der zwischen den Grundkörpern fixierten Membran ist bevorzugt rund. Durch die Dicke, den Querschnitt über die Fläche und/oder den Durchmesser der Membran kann in Abhängigkeit von dem Werkstoff, aus dem die Membran gebildet ist, die Membranfederkonstante eingestellt werden. Damit ist eine gezielte Einstellung des Öffnungsdruckes und des gesamten Öffnungsverhaltens der Membran möglich. An der Oberfläche der Membran können Erhebungen und/oder Vertiefungen ausgebildet sein, die ein abgestuftes Öffnen ermöglichen.

Auf der dem ersten Grundkörper zugewandten Oberfläche der Membran kann im Bereich des Dichtelements ein Verschlusselement aufgebracht sein. Das Verschlusselement sollte bevorzugt aus einem Polymer, insbesondere aus einem Elastomer, gebildet sein. Durch eine gezielte Auswahl des Polymers kann eine hohe Fluiddichtheit und eine erhöhte Einsatztemperatur für das Ventil von bis zu 300 °C erreicht werden.

Das Dichtelement kann aus einem Glas oder einem keramischen Werkstoff gebildet sein. Der keramische Werkstoff kann dabei der gleiche Werkstoff wie der Werkstoff für die Schichten und/oder für die Membran sein.

Mittels der Schichtdicke(n) des Verschlusselements und/oder des Dichtelements kann die Vorspannung der Membran beeinflusst werden. Damit kann der Öffnungsdruck und das Öffnungsverhalten der Membran weiter beeinflusst und eingestellt werden.

Zur Ausbildung eines aktiven Ventils kann auf der Membran mindestens ein aktorisch wirkendes Element ausgebildet sein. Dies kann bevorzugt ein piezoaktives, ein thermisch aktives, ein elektrisch aktives und/oder ein elektromagnetisch aktives Element sein. Mittels eines aktorischen Elements kann das Ventil gezielt geöffnet bzw. geschlossen werden.

Bei einem Verfahren zur Herstellung eines erfindungsgemäßen Ventils werden in einer ersten Alternative ein erster Grundkörper und ein zweiter Grundkörper aus mehreren übereinander aufgebrachten Schichten, die aus einem keramischen Werkstoff gebildet sind, jeweils in Form einer Suspension oder einer Paste mittels Siebdruck oder Schablonendruck in einer definierten Geometrie unter Ausbildung der Zuführung und der Abführung für das Fluid ausgebildet.

Zur Ausbildung der Durchführung für das Fluid und der Kavität in den Grundkörpern wird in den Grundkörpern jeweils innerhalb mindestens einer Schicht ein weiterer Werkstoff, der bei einer thermischen Behandlung entfernbar ist, in Form einer Paste oder Suspension mittels Siebdruck oder Schablonendruck in einer definierten Geometrie und Dicke aufgebracht. Als weiterer Werkstoff kann/können Epoxidharz, Polyvenylalkohol (PVA), Polyvenylbutyral (PVB), Polyvenylidenflourid (PVDF), Alginate, Acrylate, Cellulosen, Ruß oder Graphit verwendet werden.

In einer zweiten Alternative werden die Grundkörper aus mehreren Schichten, die mit einem pulverförmigen keramischen Werkstoff und einem Binder gebildet und als Grünfolien mit einer definierten Geometrie ausgebildet sind, unter Ausbildung der Kavität, der Zuführung, der Durchführung und der Abführung für das Fluid übereinander gestapelt und laminiert.

Die zwischen den Grundkörpern fixierte Membran wird ausgebildet, indem auf einer dem ersten Grundkörper zugewandten Oberfläche des zweiten Grundkörpers in der Kavität mindestens eine weitere Schicht aus einem keramischen Werkstoff mittels Siebdruck oder Schablonendruck in einer definierten Geometrie und Dicke zur Ausbildung der elastisch verformbaren Membran über den weiteren Werkstoff, der bei einer thermischen Behandlung entfernbar ist, aufgebracht wird. In einer alternativen Ausführungsform wird die Membran aus mindestens einer Schicht, die aus einem keramischen Werkstoff gebildet und als Grünfolie in einer definierten Geometrie ausgebildet ist, auf den zweiten Grundkörper aufgebracht und laminiert.

Auf der dem zweiten Grundkörper zugewandten Wand des ersten Grundkörpers wird in der Kavität umlaufend um die Zuführung für das Fluid ein Dichtelement mit einer definierten Form und Dicke in Form einer Suspension oder Paste mittels Siebdruck oder Schablonendruck oder in Form mindestens einer entsprechend geformten und dimensionierten Grünfolie aufgebracht.

Der Schichtaufbau des ersten und des zweiten Grundkörpers werden bei einer thermischen Behandlung gesintert. Falls ein weiterer Werkstoff zur Ausbildung der Kavität und/oder der Durchführungen für das Fluid in den ersten und/oder zweiten Grundkörper eingebracht wurde, wird dieser bei der thermischen Behandlung entfernt.

Nach der thermischen Behandlung werden der erste und der zweite Grundkörper mit einem Fügematerial zusammen gefügt.

Nach der thermischen Behandlung und vor dem Zusammenfügen des ersten und zweiten Grundkörpers kann auf einer dem ersten Grundkörper zugewandten Oberfläche der Membran im Bereich des Dichtelements ein Verschlusselement aufgebacht werden. Dieses kann in Form einer Suspension oder Paste mittels Siebdruck oder Schablonendruck aufgebacht werden.

Die Schichten aus einem keramischen Werkstoff sollten mit Dicken im Bereich von 10 µm bis 500 µm ausgebildet werden. Die Membran sollte mit Dicken im Bereich von 10 µm bis 500 µm ausgebildet werden.

Die Bereiche zum Einbringen eines weiteren Werkstoffs und/oder zur Ausbildung von Hohlräumen können durch Prägen und/oder Ablation von noch nicht gesinterten keramischen Werkstoffen ausgebildet werden.

Auf der Membran kann mindestens ein aktorisch wirkendes Element aufgebracht werden, so dass ein aktives Ventil gebildet wird. Das Aufbringen kann mittels Siebdruck, Lamination und/oder mittels formschlüssigem Verbinden erreicht werden. Der Werkstoff zur Ausbildung des aktorischen Elements kann vor dem Fügen der Grundkörper thermisch behandelt, z.B. gehärtet oder gesintert werden.

Durch die Entwicklung von passiven oder aktiven Ventilen aus Mehrlagenkeramik wird die Lücke zwischen den mittels Halbleiterprozessen gefertigten siliziumbasierten Komponenten und den durch Feinwerktechnik gefertigten metallischen Komponenten geschlossen. Dabei werden etablierte Materialsysteme, wie keramische Grünfolien oder keramikkompatible Funktionspasten, genutzt.

Eine Umsetzung solcher Systeme in Mehrlagenkeramik erlaubt die geringe Strukturgrößen und weist zudem eine hohe chemische Resistenz, hohe Temperaturbeständigkeit und eine hohe Packungsdichte auf. Außerdem wird durch die Verwendung der Mehrlagenkeramik zur Ausbildung mehrerer Strukturen auf einem Substrat analog zur Halbleitertechnologie eine Kostenoptimierung erreicht.

Durch die Ausbildung der Membran mittels Siebdruck oder Schablonendruck können sehr dünne Membranen aus keramischem Werkstoff ausgebildet werden, die sich an den Grundkörper und Dichtelement anlegen und somit einen Schutz vor Zerstörung den Ventils oder einem in Strömungsrichtung nach dem Ventil angeordneten System bilden. Andererseits ist durch die Verwendung von Druckverfahren eine weitere Miniaturisierung erreichbar.

Die offenbarten Ventile können mit anderen mehrlagenkeramischen Komponenten, wie z. B. Mikroreaktoren, mehrlagenkeramischen Brennstoffzellen oder fluidischer Sensorik ergänzt und kombiniert werden. Sie können beispielsweise in Mikropumpen, insbesondere für chemisch aggressive Medien und Hochtemperaturanwendungen in allen Industriebereichen, oder zur Ausbildung von Mikroreaktoren oder Mikromischern Anwendung finden.

Nachfolgend soll die Erfindung beispielhaft erläutert werden.

Dabei zeigen:
- Figur 1: eine beispielhafte Ausführungsform eines passiven Ventils in einer Draufsicht und zwei Schnittdarstellungen, und
- Figur 2: eine beispielhafte Ausführungsform eines aktiven Ventils in einer Draufsicht und einer Schnittdarstellung.

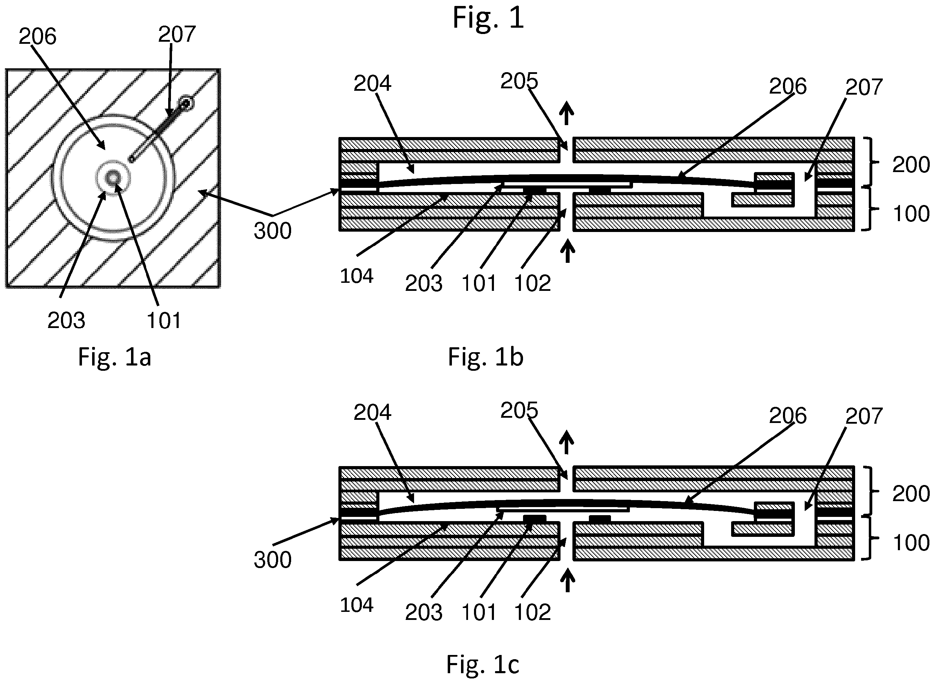

Figur 1 zeigt eine beispielhafte Ausführungsform eines passiven Ventils, wobei in Figur 1a eine Draufsicht und in Figur 1b ein Querschnitt durch das Ventil dargestellt ist. Figur 1c zeigt das Ventil in geöffneter Stellung.

Das Ventil ist aus einem ersten Grundkörper 100 und einem zweiten Grundkörper 200 gebildet, die jeweils aus mehreren Schichten aus einem keramischen Werkstoff gebildet sind. Die Anzahl der Schichten, die den ersten Grundkörper 100 und den zweiten Grundkörper 200 bilden, muss nicht gleich groß sein. Der erste Grundkörper 100 und der zweite Grundkörper 200 sind mit einem Glaslot als Fügematerial 300 fluiddicht zusammengefügt, wobei zwischen dem ersten Grundkörper 100 und dem zweiten Grundkörper 200 eine Kavität 204 gebildet ist. Das Glaslot kann mittels Siebdruck auf zu fügende Oberflächenbereiche mindestens eines der Grundkörper 100 und/oder 200 aufgebracht werden.

Zwischen dem ersten Grundkörper 100 und dem zweiten Grundkörper 200 ist eine kreisrunde, elastisch verformbare Membran 206, die aus einem keramischen Material gebildet ist, fixiert.

In dem ersten Grundkörper 100 ist in einer dem zweiten Grundkörper 200 zugewandten Wand 104 und der Oberfläche der Membran 206 eine Zuführung 102 für ein Fluid in die Kavität 204 ausgebildet. Umlaufend um die Zuführung ist ein Dichtelement 101 ausgebildet. In dem zweiten Grundkörper 200 ist eine Abführung 205 für das Fluid aus der Kavität 204 ausgebildet. Außerdem ist in der Kavität 204 eine Durchführung 207 für das Fluid in Form einer Bypassleitung ausgebildet, durch die Fluid bei vom Dichtelement 101 abgehobener Membran 206 strömen kann.

Zur Herstellung des Ventils wurden zunächst der erste Grundkörper 100 und der zweite Grundkörper 200 ausgebildet. Dazu wurden für den ersten Grundkörper 100 mindestens drei Schichten in Form einer Suspension, die einen pulverförmigen keramischen Werkstoff, insbesondere Al₂O₃, ZrO₂, AlN oder Gläser enthält, durch Siebdruck in einer definierten Geometrie übereinander aufgebracht. Für den zweiten Grundkörper 200 wurden mindestens drei Schichten aus dem gleichen Werkstoff mittels Siebdruck in gleicher Form übereinander aufgebracht. Die Schichtdicke der einzelnen aufgebrachten Schichten liegt im Bereich von 10 µm bis 500 µm. In einer anderen alternativen Ausführungsform können die Schichten des ersten Grundkörpers 100 und des zweiten Grundkörpers 200 in Form von Grünfolien übereinander gestapelt und laminiert werden.

In dem ersten Grundkörper 100 wurde durch das Aufbringen der Schichten aus einem keramischen Werkstoff in einer definierten Geometrie die Zuführung 102 für das Fluid in das Ventil ausgebildet. Auf gleiche Weise wurde die Abführung 205 für das Fluid in dem zweiten Grundkörper 200 und die Kavität 204 in dem ersten Grundkörper 100 und dem zweiten Grundkörper 200 ausgebildet.

Die Ausbildung der Durchführung 207 für das Fluid wurden Bereiche, die senkrecht zum Schichtaufbau ausgebildet sind, durch Aufbringen der Schichten aus dem keramischem Werkstoff in definierter Geometrie, also durch Aussparungen / Hohlräume innerhalb einer oder mehrerer Schichten erreicht. In Hohl-und Freiräumen, die eine flächige Ausdehnung innerhalb mindestens einer der Schichten aufweisen, wurden Polymere oder Oligomere oder Kohlenstoffe als weiterer Werkstoff, der bei einer thermischen Behandlung entfernt werden kann, in Form einer Paste mittels Siebdruck aufgebracht.

Zur Ausbildung der kreisrunden Membran 206 wurde auf der dem ersten Grundkörper 100 zugewandten Oberfläche des zweiten Grundkörpers 200 im Bereich der Kavität 204 mit Hilfe von Polymeren, Oligomeren oder Kohlenstoff als weiterer Werkstoff, der bei einer thermischen Behandlung entfernt werden kann, in Form einer Paste mittels Siebdruck in mindestens zwei Schichten mit einer Dicke im Bereich von je 10 µm bis 500 µm aufgebracht.
In der anderen alternativen Ausführungsform, bei der der zweite Grundkörper 200 mittels keramischer Folien ausgebildet wird, kann die Kavität 204 in den Schichten unterhalb der herzustellenden Membran 206 mittels Zuschnitt der keramischen Folien in einer geeigneten Geometrie und/oder durch Ablation oder Prägen der ungesinterten keramischen Folien ausgebildet werden.

Darüber wurden zur Ausbildung der elastisch verformbaren Membran 206 mindestens eine Schicht mit einem keramischen Werkstoff, insbesondere LTCC, HTCC oder Glas-Keramik-Komposit mit einer Dicke im Bereich von je 10 µm bis 500 µm mittels Siebdruck aufgebracht. Die Membran 206 kann auch in Form mindestens einer Grünfolie aufbracht und laminiert werden.
Auf dem ersten Grundkörper 100 wurde kreisförmig umlaufend um die Zuführung 102 das Dichtelement 101 aufgebracht. Das Dichtelement ist aus Glas, LTCC, HTCC oder Glas-Keramik-Komposit gebildet und wurde mittels Sieb-oder Schablonendruck in mindestens einer Schichten mit einer Schichtdicke von je 10 µm bis 500µm aufgebracht.

Beim Drucken der Schichten wurde eine für das Drucken geeignete Viskosität eingehalten.

Die beiden Grundkörper wurden anschließend einer thermischen Behandlung unterzogen, bei der der keramische Werkstoff gesintert und die Polymere oder Oligomere oder Kohlenstoffe durch thermische Zersetzung entfernt wurden.

Nach der thermischen Behandlung und vor dem Zusammenfügen des ersten Grundkörpers 100 und des zweiten Grundkörpers 200 wurde auf die dem ersten Grundkörper zugewandte Oberfläche der Membran 206 im Bereich des Dichtelements 101 das Verschlusselement 203 aus einem Polymer oder Oligomer aufgebracht. Das Verschlusselement wurde in einer Suspension mittels Sieb- oder Schablonendruck auf die Membran mit einer Schichtdicke von 10 µm bis 500 µm aufgebracht.

Der erste Grundkörper 100 und der zweite Grundköper 200 wurden dann mittels eines Glaslotes, Epoxidharz, Silikon oder eines metallischen Lotes in Form einer Folie oder siebdruckfähigen Schicht als Fügematerial 300 zusammengefügt.

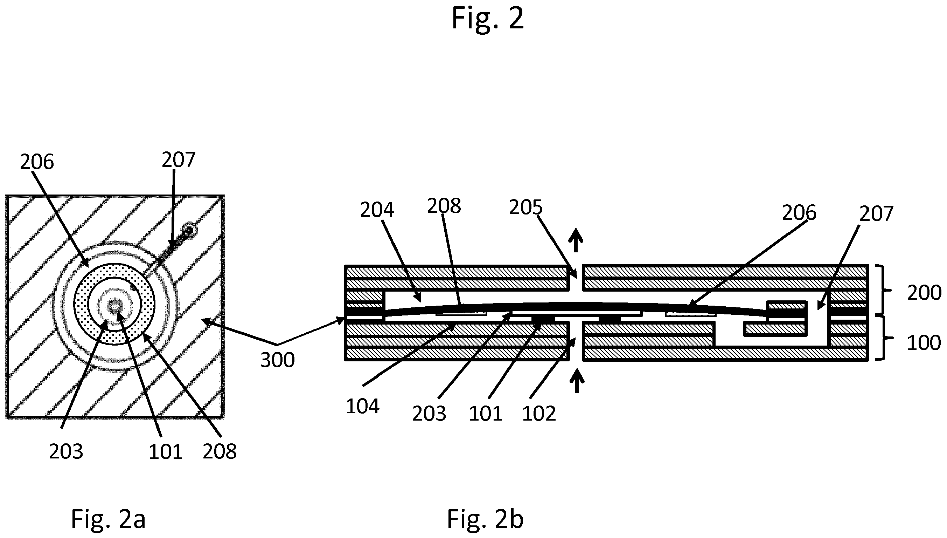

Das in Figur 2a als Draufsicht und in Figur 2b im Querschnitt dargestellte aktive Ventil wurde im Wesentlichen wie das in Figur 1 dargestellte passive Ventil gefertigt. Dabei wurde vor dem Zusammenfügen des ersten Grundkörpers 100 und des zweiten Grundkörpers 200 eine mechanisch aktive Schicht, wie z.B. eine piezoelektrische Schicht oder ein elektrischer Heizer als aktorisches Element in Form einer Paste oder Suspension mittels Schablonen- oder Siebdruck aufgebracht. Die aufgebrachten Schichten werden in einem weiteren Schritt thermisch behandelt, beispielsweise gehärtet oder gesintert, und anschließend elektrisch kontaktiert. Danach erfolgt das Fügen des ersten Grundkörpers 100 und des zweiten Grundkörpers 200.

## Patentansprüche

1. Ventil aus einem keramischen Werkstoff, das aus einem ersten Grundkörper (100) und einem zweiten Grundkörper (200) mittels eines Fügematerials (300) zusammengefügt ist und wobei zwischen dem ersten und dem zweiten Grundkörper (100, 200) eine Kavität (204) ausgebildet ist, wobei
der erste und der zweite Grundkörper (100, 200) jeweils aus mehreren Schichten eines keramischen Werkstoffs gebildet ist, und
in dem ersten Grundkörper (100)
eine Zuführung (102) für ein Fluid in die Kavität (204) in einer dem zweiten Grundkörper (200) zugewandten Wand (104) ausgebildet ist,
in der Kavität (204) zwischen dem ersten Grundkörper (100) und dem zweiten Grundkörper (200) eine Membran (206), die elastisch verformbar ist, fixiert ist, und
in dem zweiten Grundkörper (200) eine Abführung (205) für das Fluid von der Kavität (204) aus dem Ventil heraus ausgebildet ist, **dadurch gekennzeichnet, dass** auf der Oberfläche der Wand (104) im Inneren der Kavität (204) ein Dichtelement (101) umlaufend um die Zuführung (102) aufgebracht ist, dass in der Kavität (204) eine Durchführung (207) für das Fluid in Form einer Bypassleitung ausgebildet ist, und dass die Membran (206) aus einem keramischen Werkstoff gebildet ist.

2. Ventil nach Anspruch 1, **dadurch gekennzeichnet, dass** die Schichten aus einem keramischen Werkstoff und/oder die Membran (206) aus LTCC, HTCC, Glas und/oder Keramikkomposit gebildet ist/sind.

3. Ventil nach einem der vorhergehenden Ansprüche, **dadurch gekennzeichnet, dass** auf der dem ersten Grundkörper (100) zuwandten Oberfläche der Membran (206) im Bereich des Dichtelements (101) ein Verschlusselement (203) aufgebracht ist.

4. Ventil nach dem Anspruch 3, **dadurch gekennzeichnet, dass** das Verschlusselement (203) mit einem Polymer, insbesondere mit einem Elastomer, gebildet ist.

5. Ventil nach einem der vorhergehenden Ansprüche, **dadurch gekennzeichnet, dass** das Dichtelement (101) aus einem Glas oder einem keramischen Werkstoff gebildet ist.

6. Ventil nach einem der vorhergehenden Ansprüche, **dadurch gekennzeichnet, dass** die Membranfederkonstante durch die Dicke, den Querschnitt über die Fläche und/oder den Durchmesser der Membran (206) in Abhängigkeit vom Werkstoff, aus dem die Membran (206) gebildet ist, einstellbar ist.

7. Ventil nach einem der vorhergehenden Ansprüche, **dadurch gekennzeichnet, dass** durch die Schichtdicke(n) des Dichtelements (101) und/oder des Verschlusselements (203) die Vorspannung der Membran (206) beeinflussbar ist.

8. Ventil nach einem der vorhergehenden Ansprüche, **dadurch gekennzeichnet, dass** das Fügematerial (300) ein Glaslot, ein Aktivlot oder ein Klebstoff ist.

9. Ventil nach einem der vorhergehenden Ansprüche, **dadurch gekennzeichnet, dass** auf der Membran (206) mindestens ein aktorisch wirkendes Element (208) aufgebracht ist.

10. Ventil nach Anspruch 9, **dadurch gekennzeichnet, dass** das mindestens eine aktorisch wirkende Element (208) ein piezoaktives, ein thermisch aktives, ein elektrisch aktives und/oder ein elektromagnetisch aktives Element ist.

11. Verfahren zur Herstellung eines Ventils aus einem keramischen Werkstoff nach einem der vorherigen Ansprüche, bei dem
zur Ausbildung eines ersten Grundkörpers (100) und eines zweiten Grundkörpers (200)
mehrere Schichten, die aus einem keramischen Werkstoff gebildet sind, jeweils in Form einer Suspension oder Paste, in der pulverförmiger keramischer Werkstoff und mindestens ein Binder enthalten sind, mittels Siebdruck oder Schablonendruck in einer definierten Geometrie übereinander aufgebracht werden, und dabei
zur Ausbildung der Kavität (204) und der Durchführung (207) des Fluids innerhalb mindestens einer Schicht ein weiterer Werkstoff, der bei einer thermischen Behandlung entfernbar ist, in Form einer Paste oder Suspension mittels Siebdruck oder Schablonendruck in einer definierter Geometrie und Dicke aufgebracht wird,
oder
mehrere Schichten, die aus einem keramischen Werkstoff gebildet sind, die als Grünfolien in einer definierten Geometrie ausgebildet sind, schichtweise unter Ausbildung der Kavität (204), der Zuführung (102) für ein Fluid in die Kavität (204), der Durchführung (207) des Fluids und der Abführung (205) des Fluids aus dem zweiten Grundkörper (200) übereinander gestapelt und laminiert werden,
und
zur Ausbildung einer Membran (206) auf einer dem ersten Grundkörper (100) zugewandten Oberfläche des zweiten Grundkörpers (200) mindestens eine weitere Schicht aus einem keramischen Werkstoff mittels Siebdruck oder Schablonendruck für die Ausbildung der elastisch verformbaren Membran (206) aufgebracht wird, oder
die Membran (206) in Form mindestens einer Schicht, die aus einem keramischen Werkstoff gebildet und als Grünfolie in einer definierten Geometrie ausgebildet ist, auf den zweiten Grundkörper (200) aufgebracht und laminiert wird,
und
auf der dem zweiten Grundkörper (200) zugewandten Oberfläche der Wand (104) des ersten Grundkörpers (100) in der Kavität (204) umlaufend um die Zuführung (102) ein Dichtelement (101) mit einer definierten Geometrie und Dicke in Form einer Suspension oder Paste mittels Siebdruck oder Schablonendruck oder in Form mindestens einer Grünfolie aufgebracht wird, und
die Schichtaufbauten des ersten Grundkörpers (100) und des zweiten Grundkörpers (200) bei einer thermischen Wärmebehandlung gesintert werden, und falls ein weiterer Werkstoff zur Ausbildung von Kavitäten eingebracht wurde, dieser bei der thermischen Wärmebehandlung entfernt wird, und
nach der thermischen Wärmebehandlung der erste Grundkörper (100) und der zweite Grundkörper (200) mit einem Fügematerial (300) zusammengefügt werden.

12. Verfahren nach Anspruch 11, **dadurch gekennzeichnet, dass** nach der thermischen Wärmebehandlung und vor dem Zusammenfügen des ersten und zweiten Grundkörpers (100, 200) auf einer dem ersten Grundkörper (100) zugewandten Oberfläche der Membran (206) im Bereich des Dichtelements (101) ein Verschlusselement (203) in Form einer Suspension oder Paste mittels Siebdruck oder Schablonendruck aufgebracht wird.

13. Verfahren nach einem der vorhergehenden Ansprüche 11 und 12, **dadurch gekennzeichnet, dass** die Schichten aus keramischem Werkstoff mit Dicken im Bereich 10 µm bis 500 µm und/oder die Membran mit Dicken im Bereich 10 µm bis 500 µm ausgebildet werden.

14. Verfahren nach einem der vorhergehenden Ansprüche 11 bis 13, **dadurch gekennzeichnet, dass** die Bereiche zum Einbringen eines weiteren Werkstoffs und/oder zur Ausbildung von Hohlräumen durch Prägen und/oder Laserablation ausgebildet werden.

15. Verfahren nach einem der vorhergehenden Ansprüche 11 bis 14, **dadurch gekennzeichnet, dass** auf die Membran (206) mindestens ein aktorisch wirkendes Element (208) aufgebracht wird.

16. Verfahren nach Anspruch 15, **dadurch gekennzeichnet, dass** das mindestens eine aktorisch wirkende Element (208) mittels Siebdruck, Lamination und/oder eines Fügeprozesses auf die Membran (206) aufgebracht wird.

## Claims

1. Valve made of a ceramic material, which is joined together from a first main body (100) and a second main body (200) by means of a joining material (300), and wherein a cavity (204) is formed between the first and the second main body (100, 200), wherein the first and the second main body (100, 200) are each formed from a number of layers of a ceramic material, and a feed (102) for a fluid into the cavity (204) is formed in a wall (104) facing the second main body (200) in the first main body (100), a diaphragm (206), which is elastically deformable, is fixed in the cavity (204) between the first main body (100) and the second main body (200) and a drain (205) for the fluid from the cavity (204) out of the valve is formed in the second main body (200), **characterized in that** a sealing element (101) is applied circumferentially around the feed (102) on the surface of the wall (104) in the interior of the cavity (204), **in that** a passage (207) for the fluid in the form of a bypass line is formed in the cavity (204), and **in that** the diaphragm (206) is formed from a ceramic material.

2. Valve according to Claim 1, **characterized in that** the layers are formed from a ceramic material and/or the diaphragm (206) is formed from LTCC, HTCC, glass and/or ceramic composite.

3. Valve according to either of the preceding claims, **characterized in that** a closure element (203) is applied in the region of the sealing element (101) on the surface of the diaphragm (206) facing the first main body (100).

4. Valve according to Claim 3, **characterized in that** the closure element (203) is formed with a polymer, in particular with an elastomer.

5. Valve according to one of the preceding claims, **characterized in that** the sealing element (101) is formed from a glass or a ceramic material.

6. Valve according to one of the preceding claims, **characterized in that** the diaphragm spring constant can be set by the thickness, the cross section over the surface area and/or the diameter of the diaphragm (206), in dependence on the material from which the diaphragm (206) is formed.

7. Valve according to one of the preceding claims, **characterized in that** the prestressing of the diaphragm (206) can be influenced by the layer thickness(es) of the sealing element (101) and/or of the closure element (203).

8. Valve according to one of the preceding claims, **characterized in that** the joining material (300) is a glass solder, an active solder or an adhesive.

9. Valve according to one of the preceding claims, **characterized in that** at least one element (208) acting in the manner of an actuator is applied on the diaphragm (206).

10. Valve according to Claim 9, **characterized in that** the at least one element (208) acting in the manner of an actuator is a piezo-active, a thermally active, an electrically active and/or an electromagnetically active element.

11. Method for producing a valve from a ceramic material according to one of the preceding claims, in which
to form a first main body (100) and a second main body (200)
a number of layers that are formed from a ceramic material, in each case in the form of a suspension or paste, in which powdered ceramic material and at least one binder are contained, are applied in a defined geometry one on top of the other by means of screen printing or stencil printing, and at the same time
to form the cavity (204) and the passage (207) of the fluid within at least one layer, a further material, which can be removed in a thermal treatment, in the form of a paste or suspension is applied in a defined geometry and thickness by means of screen printing or stencil printing,
or
a number of layers, which are formed from a ceramic material, as green sheets in a defined geometry, are stacked one on top of the other in layers to form the cavity (204), the feed (102) for a fluid into the cavity (204), the passage (207) of the fluid and the drain (205) of the fluid out of the second main body (200) and are laminated,
and
to form a diaphragm (206) on a surface of the second main body (200) facing the first main body (100), at least one further layer of a ceramic material is applied by means of screen printing or stencil printing for the formation of the elastically deformable diaphragm (206), or
the diaphragm (206) is applied in the form of at least one layer, which is formed from a ceramic material as a green sheet in a defined geometry, to the second main body (200) and is laminated,
and
on the surface of the wall (104) of the first main body (100) facing the second main body (200) in the cavity (204), a sealing element (101) with a defined geometry and thickness is applied circumferentially around the feed (102) in the form of a suspension or paste by means of screen printing or stencil printing or in the form of at least one green sheet, and
the layer structures of the first main body (100) and the second main body (200) are sintered in a thermal heat treatment, and, if a further material has been introduced to form cavities, this is removed in the thermal heat treatment, and
after the thermal heat treatment, the first main body (100) and the second main body (200) are joined together with a joining material (300).

12. Method according to Claim 11, **characterized in that**, after the thermal heat treatment and before the joining together of the first and second main body (100, 200), a closure element (203) is applied on a surface of the diaphragm (206) facing the first main body (100) in the region of the sealing element (101) in the form of a suspension or paste by means of screen printing or stencil printing.

13. Method according to either of the preceding Claims 11 and 12, **characterized in that** the layers are formed from ceramic material with thicknesses in the range of 10 µm to 500 µm and/or the diaphragm is formed with thicknesses in the range of 10 µm to 500 µm.

14. Method according to one of the preceding Claims 11 to 13, **characterized in that** the regions for introducing a further material and/or for forming cavities are formed by stamping and/or laser ablation.

15. Method according to one of the preceding Claims 11 to 14, **characterized in that** at least one element (208) acting in the manner of an actuator is applied to the diaphragm (206).

16. Method according to Claim 15, **characterized in that** the at least one element (208) acting in the manner of an actuator is applied to the diaphragm (206) by means of screen printing, lamination and/or a joining process.

## Revendications

1. Soupape en matériau céramique, qui est constituée d'un premier corps de base (100) et d'un deuxième corps de base (200) assemblés au moyen d'un matériau de jonction (300) et dans lequel, entre les premier et deuxième corps de base (100, 200), est formée une cavité (204), dans laquelle,
les premier et deuxième corps de base (100, 200) sont constitués chacun de plusieurs couches d'un matériau céramique et
dans le premier corps de base (100) est réalisée un conduit d'alimentation (102) pour un fluide vers la cavité (204) dans une paroi (104) orientée vers le deuxième corps de base (200)
dans la cavité (204) entre le premier corps de base (100) et le deuxième corps de base (200), est fixée une membrane (206) qui est déformable élastiquement et
dans le deuxième corps de base (200), est réalisée un conduit d'évacuation (205) pour le fluide depuis la cavité (204) vers l'extérieur de la soupape,
**caractérisée en ce que**, sur la surface de la paroi (104) à l'intérieur de la cavité (204) est appliqué, en s'étendant autour du conduit d'alimentation (102), un élément d'étanchéité (101), **en ce que**, dans la cavité (204), est réalisé un passage (207) pour le fluide sous la forme d'une conduite de dérivation, et **en ce que** la membrane (206) est constituée d'un matériau céramique.

2. Soupape selon la revendication 1, **caractérisée en ce que** les couches sont constituées d'un matériau céramique et/ou la membrane (206) est constituée de LTCC, de HTCC, de verre et/ou de composite céramique.

3. Soupape selon l'une des revendications précédentes, **caractérisée en ce que**, sur la surface de la membrane (206) orientée vers le premier corps de base (100), dans la région de l'élément d'étanchéité (101), est appliqué un élément de fermeture (203).

4. Soupape selon la revendication 3, **caractérisée en ce que** l'élément de fermeture (203) est constitué d'un polymère, plus particulièrement d'un élastomère.

5. Soupape selon l'une des revendications précédentes, **caractérisée en ce que** l'élément d'étanchéité (101) est constitué d'un verre ou d'un matériau céramique.

6. Soupape selon l'une des revendications précédentes, **caractérisée en ce que** la constante de raideur de la membrane peut être ajustée grâce à l'épaisseur, la section transversale de la surface et/ou le diamètre de la membrane (206), en fonction du matériau dont est constitué la membrane (206).

7. Soupape selon l'une des revendications précédentes, **caractérisée en ce que** l'épaisseur de la ou des couches de l'élément d'étanchéité (101) et/ou de l'élément de fermeture (203) permet d'influer sur la précontrainte de la membrane (206).

8. Soupape selon l'une des revendications précédentes, **caractérisée en ce que** le matériau de jonction (300) est une brasure de verre, une brasure active ou une colle.

9. Soupape selon l'une des revendications précédentes, **caractérisée en ce que**, sur la membrane (206) est appliqué au moins un élément (208) agissant comme un actionneur.

10. Soupape selon la revendication 9, **caractérisée en ce que** l'au moins un élément (208) agissant comme un actionneur est un élément piézoélectriquement actif, thermiquement actif, électriquement actif et/ou électromagnétiquement actif.

11. Procédé de fabrication d'une soupape en matériau céramique selon l'une des revendications précédentes, dans lequel
pour la formation d'un premier corps de base (100) et d'un deuxième corps de base (200),
plusieurs couches, constituées d'un matériau céramique, chacune sous la forme d'une suspension ou d'une pâte, dans laquelle sont contenus un matériau céramique en poudre et au moins un liant, sont appliquées les unes sur les autres par sérigraphie ou par impression au pochoir, dans une géométrie définie et
pour la formation de la cavité (204) et du passage (207) du fluide, à l'intérieur d'au moins une couche, est appliqué un autre matériau, qui peut être éliminé lors d'un traitement thermique, sous la forme d'une pâte ou d'une suspension, par sérigraphie ou par impression au pochoir, selon une géométrie et avec une épaisseur définies,
ou
plusieurs couches, constituée d'un matériau céramique, conçues comme des feuilles crues selon une géométrie définie, sont empilées les unes sur les autres et stratifiées couche par couche en formant la cavité (204), le conduit d'alimentation (102) pour un fluide dans la cavité (204), le passage (207) du fluide et le conduit d'évacuation (205) du fluide hors du deuxième corps de base (200),
et
pour la formation d'une membrane (206), sur une surface du deuxième corps de base (200), orientée vers le premier corps de base (100), est appliquée une couche supplémentaire en matériau céramique par sérigraphie ou par impression au pochoir pour la formation de la membrane déformable élastiquement (206) ou
la membrane (206) est appliquée et stratifiée, sous la forme d'au moins une couche constituée d'un matériau céramique et réalisée sous la forme d'une feuille crue selon une géométrie définie, sur le deuxième corps de base (200)
et
sur la surface de la paroi (104) du premier corps de base (100) orientée vers le deuxième corps de base (200), dans la cavité (204), autour du conduit d'alimentation (102), est appliqué un élément d'étanchéité (101) avec une géométrie et une épaisseur définies sous la forme d'une suspension ou d'une pâte par sérigraphie ou par impression au pochoir ou sous la forme d'au moins une feuille crue et
les structures des couches du premier corps de base (100) et du deuxième corps de base (200) sont frittées lors d'un traitement thermique et, si un autre matériau a été introduit pour la formation de cavités, celui-ci est éliminé lors du traitement thermique et
après le traitement thermique, le premier corps de base (100) et le deuxième corps de base (200) sont assemblés avec un matériau de jonction (300).

12. Procédé selon la revendication 11, **caractérisé en ce que**, après le traitement thermique et avant l'assemblage des premier et deuxième corps de base (100, 200), sur une surface de la membrane (206) orientée vers le premier corps de base (100), au niveau de l'élément d'étanchéité (101), est appliqué un élément de fermeture (203) sous la forme d'une suspension ou d'une pâte par sérigraphie ou par impression au pochoir.

13. Procédé selon l'une des revendications 11 et 12, **caractérisé en ce que** les couches sont constituées d'un matériau céramique avec des épaisseurs dans la gamme de 10 µm à 500 µm et/ou la membrane avec des épaisseurs dans la gamme de 10 µm à 500 µm.

14. Procédé selon l'une des revendications 11 à 13, **caractérisé en ce que** les zones pour l'introduction d'un autre matériau et/ou pour la formation de cavités sont réalisées par estampage et/ou par ablation au laser.

15. Procédé selon l'une des revendications 11 à 14, **caractérisé en ce que**, sur la membrane (206), est appliqué au moins un élément agissant comme un actionneur (208).

16. Procédé selon la revendication 15, **caractérisé en ce que** l'au moins un élément agissant comme un actionneur (208) est appliqué par sérigraphie, statification et/ou un processus de jonction, sur la membrane (206).
